Europäisches Patentamt

European Patent Office

Office européen des brevets

(19)

(11) Publication number: **0 443 681 A2**

# EUROPEAN PATENT APPLICATION

(21) Application number: **91200339.9**

(22) Date of filing: **16.02.91**

(51) Int. Cl.⁵: **F16L 33/02**

(30) Priority: **20.02.90 IT 1942890**

(43) Date of publication of application:
**28.08.91 Bulletin 91/35**

(84) Designated Contracting States:
**AT BE CH DE DK ES FR GB GR IT LI LU NL SE**

(71) Applicant: **C.I.M.A. COMPAGNIA ITALIANA MOLLE ACCIAIO S.P.A.**
**Via Piave 66**
**I-20040 Busnago, Milan(IT)**

(72) Inventor: **Bellazzi, Emilio**
**Via A. Volta, 25**
**-I- 20052 Monza, Milan(IT)**
Inventor: **Ferlicca, Roberto**
**Via Peucher 22**
**-I- 20040 Cornate D'Adda, Milan(IT)**

(74) Representative: **Henke, Erwin et al**
**Ing.Barzanò & Zanardo Milano S.p.A. Via Borgonuovo, 10**
**I-20121 Milano(IT)**

(54) **Elastic ribbed metal clamp for connecting pipes.**

(57) A ribbed metal clamp suitable for connecting co-axial pipes is disclosed. Said clamp consists of a single strap of even thickness, having tapered ends, both of which end with two practically radial arms extending outwardly from the clamp, which clamp has two longitudinal parallel stiffening ribs having even shape and depth and equal length, but staggered and with a circular cross section.

Fig.1

The use of metal clamps for connecting two co-axial pipes inside which a fluid runs is well known. The connection is performed by inserting, for a certain length, the inner pipe, made of any material, generally metal, into the outer pipe, made of relatively deformable material, like rubber or plastic or lead, the metal clamp being positioned in correspondence with the overlapping length of the two co-axial pipes.

The main feature of said connections is to maintain its effectiveness over a long period of time, not only under normal operating conditions, even in the cafe of possible ageing of the outer pipe, but also, within certain limits, under abnormal conditions due to vibrations, knocks, increases of pressure, of temperature and of fluid flow rate inside the co-axial pipes.

The sealing effectiveness is obviously assured by the absence of liquid leakage from the pipes; a possible leakage, could also cause, apart from an obvious economic loss, serious risks in the case of either high temperature fluids or fluids which are injurious to one's health, or which can form explosive mixtures when in contact with environmental air.

Several types of metal clamps that bring about the connection of two co-axial pipes are known: the connection is brought about by pressure exerted by the metal clamp on the outer deformable pipe. In order to obtain an effective connection it is important that the clamp pressure is as even as possible in order to avoid areas with a low pressure, with consequent possible detachment of the two pipes, or areas of too high pressure resulting in possible breakage of the outer deformable pipe due to the tightening effect.

The existing metal clamps mainly differ, not only in their shape, but in the way the tightening is done when they are installed. In one kind of clamp the tightening is done by means of screws which put a traction force on the clamp itself, and in so doing, it exerts a pressure on the outer deformable pipe. Said traction, in another kind of clamp, is done by hooking devices positioned at the two clamp ends, which overlap each other when the clamp is installed.

A third kind of clamp, that can be defined elastic, is not provided either with tightening screws or hooks: with this kind of clamp, pressure is exerted on the outer deformable pipe due to the elasticity of the clamp which is elastically deformed, by proper pliers, when tightening. The applied elastic deformation is such as to widen the clamp so that the two co-axial pipes can be introduced therein. As soon as the deformation force, applied by means of proper pliers, is removed the elastic metal clamp tends to reacquire its former shape again thereby exerting pressure on the outer deformable pipe.

The object of the present invention is an elastic ribbed metal clamp, belonging to this latter kind, able to achieve co-axial pipe connections, the outer pipe being of a deformable material, consisting of a strap of even thickness, essentially circular shaped, having its two ends suitably shaped so as to give the clamp, by means of adequate pliers, when tightening, a deformation which is always maintained within the elastic limit, and having two parallel stiffening ribs longitudinally extending along the clamp strap.

In comparison with clamps provided with screws or hooks, the elastic ribbed metal clamp, object of the present invention, has the advantage of maintaining an effective tightening even in the event of the outer deformable pipe undergoing a thickness reduction due, for example, to a softening caused by a temperature variation. In this case, as a matter of fact, the clamp elasticity maintains a pressure on the outer deformable pipe because its diameter reduces when the outer deformable pipe thickness reduces.

In comparison with similar kinds of clamps having a special shape lightened by slots, the elastic ribbed metal clamp object of the present invention, although assuring a similar pressure uniformity on the outer deformable pipe of the co-axial connection, offers the following advantages:

- higher cost-effectiveness due to the lower quantity of required material either because of the lesser thickness, with equal load, of the strap stiffened by the ribs, or because of fewer production scraps due to the absence of slots.
- no burring of the outer deformable pipe and, as a consequence, no possible damage of the same because no slots are present in the clamp.
- possibility of varying the dimensions of the stiffening ribs with consequent adaptability of the clamp to different loads.

For a better understanding of the elastic ribbed metal clamp, object of the present invention, reference is made to the attached drawings which, however, should not limit the scope of the invention itself.

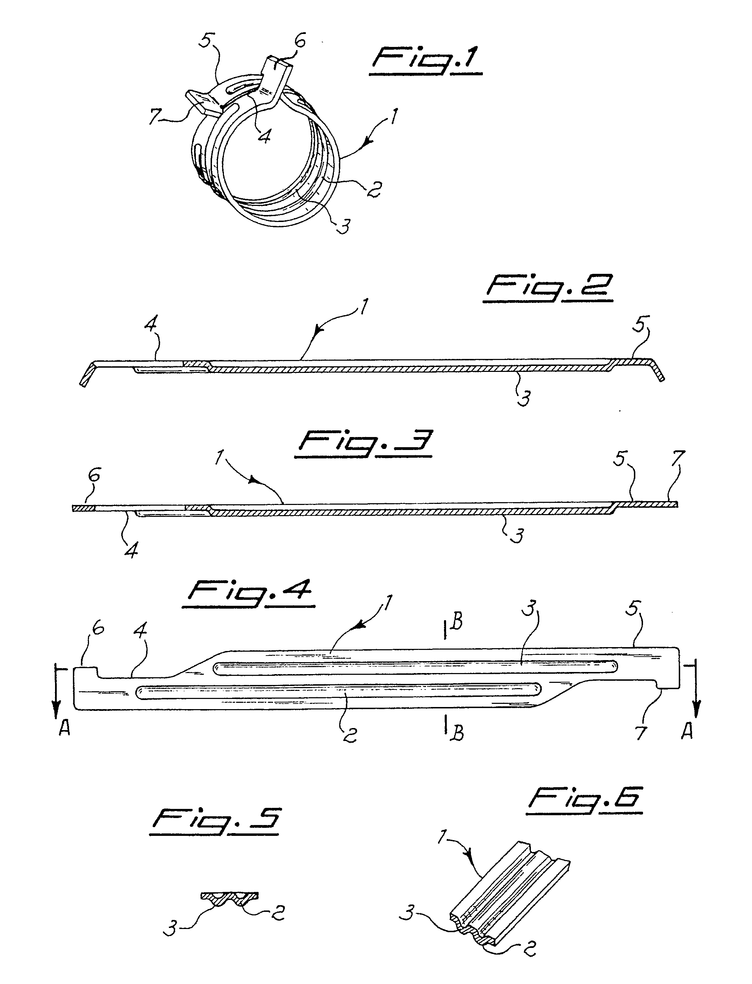

FIGURE 1 is an axonometric perspective view of the elastic ribbed metal clamp ready for use.

FIGURE 2 is a sectional view of the clamp in a plane perpendicular to the clamp strap through the line A-A of Figure 4 which line A-A is coincident with the longitudinal axis of rib 3, in the straight extension of the strap except for the terminal arms of the two ends.

FIGURE 3 is the same sectional view as in Figure 2 including also the straight extension of the terminal arms of the two ends.

FIGURE 4 is a plan view of the clamp strap in its straight extension as in Figure 3.

FIGURE 5 is a cross section of the clamp strap in a plane perpendicular to the plane that contains the strap through the line B-B shown in Figure 4.

FIGURE 6 is an axonometric perpective view of the strap cut through line B-B of Figure 4 (view from inside the clamp).

The elastic ribbed metal clamp consists of a single strap 1 having even thickness which is provided with two longitudinal stiffening ribs 2 and 3, parallel and simmetrically positioned in respect to the lonitudinal axis of the strap, of equal length, but staggered to such an extent that one end of each of them is extended along the end portions 4 and 5, which have a smaller width than the strap, said width being variable, at first decreasing and then increasing towards the extremities of the strap; these extremities end with two arms 6 and 7, wich have an increasing width towards their terminal parts, are practically radial, extend outwardly towards the clamp and are positioned at the two extremities of the strap; by means of adequate pliers applied to arms 6 and 7 the clamp diameter is widened when tightening. The stiffening ribs 2 and 3, with a practically circular cross section, are made by drawing the strap and show the concavity directed inwardly inside the clamp.

The stiffening ribs 2 and 3 are shaped with a constant cross section, i.e. with constant shape and depth as shown in Figure 6.

When in use, in order to bring about the two co-axial pipe connections, the outer one being made of deformable material, a force is applied, by means of pliers, able to approach the two arms 6 and 7, and in so doing increasing the diameter of the clamp positioned in correspondence with the overlapping of the two co-axial pipes.

When the force is removed the two arms 6 and 7 tend to separate again so decreasing the clamp diameter which induces a pressure on the outer deformable pipe of the connection. The force to be applied to the two arms 6 and 7 must produce a clamp deformation, with consequent approaching of the arms 6 and 7, which is always within the elastic limit, in order to assure the return of the clamp to its former position.

The maximum clamp deformation is reached when, with adequate pliers, the two terminal arms 6 and 7, their most external part being as wide as the strap, make contact each other. The two longitudinal stiffening ribs 2 and 3, made by drawing from the inside towards the outside of the clamp, increase the resistance of the clamp. The load being equal, it is therefore possible to manufacture the metal clamp starting from a less thicker strap, with a consequent economic advantage.

The elastic ribbed metal clamp, object of the present invention, can be manufactured by forming it from a strap of Cr/Va spring steel or stainless steel. Due to the different metallurgical characteristics of the two materials, the production run, after forming, is different; simpler for the stainless steel which does not particularly require a final surface protection.

## Claims

1. An elastic ribbed metal clamp for the connection of two co-axial pipes, the outer one being of deformable material, characterized by the fact that it consists of a single strap having an even thickness, with its two terminal portions having an increasing then decreasing width, towards the clamp extremities, which terminal portions finish with two practically radial arms extending outwardly towards the clamp, with an increasing width outwardly towards the clamp, so as to reach the same width of the strap, said strap bearing two longitudinal parallel stiffening ribs of equal length, having same shape and depth but staggered so that an end part of each of them extends along the end portions of the same for a certain length, said stiffening ribs having a practically circular section and being obtained from the inside towards the outside of clamp.

2. A metal clamp according to Claim 1, characterized by the fact that the clamp strap is made of Cr/Va spring steel

3. A metal clamp according to Claim 1, characterized by the fact that the clamp strap is made of stainless steel.

Fig.1

Fig.2

Fig.3

Fig.4

Fig.5

Fig.6